# EUROPEAN PATENT SPECIFICATION

(11) **EP 3 014 388 B1**
(45) Date of publication and mention of the grant of the patent: **01.05.2019**
(21) Application number: 13887694.1
(22) Date of filing: 27.08.2013
(51) Int. Cl.: G06F 3/01, G06F 1/16, G06F 3/0487, G06F 3/147, G06F 3/0488

(54) **PORTABLE DEVICE AND CONTROL METHOD THEREOF**
TRAGBARE VORRICHTUNG UND STEUERUNGSVERFAHREN DAFÜR
DISPOSITIF PORTABLE ET SON PROCÉDÉ DE COMMANDE

(30) Priority: 25.06.2013 KR 20130072964; 14.08.2013 US 201313967068
(43) Date of publication of application: 04.05.2016
(73) Proprietor: LG Electronics Inc., Seoul 07336 (KR)
(72) Inventor: KIM, Jihwan, Seoul 137-724 (KR); CHO, Eunju, Seoul 137-724 (KR); LEE, Jaehee, Seoul 137-724 (KR); LEE, Juhwan, Seoul 137-724 (KR)
(74) Representative: Ter Meer Steinmeister & Partner
(86) International application number: PCT/KR2013/007671
(87) International publication number: WO 2014/208813

(56) References cited:
- WO-A1-2012/001464
- KR-A- 20110 088 872
- KR-A- 20110 101 585
- US-A1- 2010 013 651
- US-A1- 2010 056 223
- US-A1- 2010 265 269
- US-A1- 2012 127 205
- US-A1- 2013 141 464
- US-A1- 2013 154 947

## Description

### Technical Field

The disclosure relates to a portable device equipped with a curved display unit, and more particularly to a portable device in which a screen mode is controlled based on a tilt of the device and a control method thereof.

### Background Art

As flexible display panels have recently entered widespread use, devices equipped with various shapes of display units have been developed. As such, devices may be configured to enable installation of curved flexible display units. In the case in which a device is equipped with a curved flexible display unit, however, a position of the device may be easily changed by external force even in a state in which the device is placed on the floor. If rotation of a screen is controlled based on the same tilt threshold as in conventional devices, this device control may have difficulty in making the most of the curved display unit's characteristics.

In US 2010/0013651 A1 a device is described including a housing having a curved support surface, and a display provided on the housing. The display is configured to display information. The device further includes a sensor configured to sense rolling movement of the housing, and a controller configured to influence the information displayed on the display in response to the rolling movement sensed by the sensor.

In WO 2012/001464 A1 an apparatus, method and computer program are provided, wherein the apparatus comprises: a housing comprising a convex portion configured to enable the apparatus to rock in response to an impulse provided by a user; and a processor configured to enable a function of the apparatus to be performed in response to the detection of the rocking of the apparatus.

In US 2013/0154947 A1 a determining of a display orientation on a screen of a portable device includes detecting a current hand position of a user on a touch sensitive surface that is applied to an entire body of the portable device; comparing the current hand position to pre-stored hand position templates that are each associated with a preferred display orientation; determining a matching hand position template; configuring the display orientation of the screen to match the preferred display orientation associated with the matching hand position template; learning hand position patterns of the user by monitoring whether the user changes the display orientation of the screen within a predetermined amount of time after the configuring of the display orientation; and modifying the preferred display orientation associated with the matching hand position template based on the learned hand position patterns of the user.

In US 2013/0141464 A1 a method can include operating a 3-axis accelerometer having two axes that define a plane and an axis perpendicular to the plane to provide an acceleration value along each of the axes and orienting output to a display in either a portrait format or a landscape format based on comparing the acceleration values for the two axes that define the plane to a threshold that depends on the acceleration value for the axis perpendicular to the plane.

### Disclosure of Invention

### Technical Problem

Accordingly, embodiments are directed to a portable device and a control method thereof that substantially obviate one or more problems due to limitations and disadvantages of the related art.

One embodiment provides a device in which a screen mode is provided based on a predetermined touch input and a tilt of the device, and a control method of the device.

Another embodiment provides a device in which a threshold is determined based on whether or not a predetermined touch input is detected, and a control method of the device.

Another embodiment provides a device in which a screen mode is provided based on whether or not grip of the device is sensed as well as a tilt of the device, and a control method of the device.

Another embodiment provides a device in which a movable mass is moved based on a detected tilt of the device if the tilt exceeds a threshold, so as to move the center of gravity of the device, and a control method of the device.

Another embodiment provides a device in which an indicator to indicate a predetermined touch input is provided, and a control method of the device.

A further embodiment provides a device in which a movable mass is moved to a predetermined position based on a predetermined touch input, and a control method of the device.

Additional advantages, objects, and features of the embodiments will be set forth in part in the description which follows and in part will become apparent to those having ordinary skill in the art upon examination of the following or may be learned from practice of the embodiments. The objectives and other advantages of the embodiments may be realized and attained by the structure particularly pointed out in the written description and claims hereof as well as the appended drawings.

### Solution to Problem

The above identified objects are solved by the features of the independent claims.

It is to be understood that both the foregoing general description and the following detailed description of the embodiments are exemplary and explanatory and are intended to provide further explanation of the embodiments as claimed.

### Advantageous Effects of Invention

As is apparent from the above description, according to one embodiment, a device may change a threshold that is a criterion for switching between screen modes based on whether or not a predetermined touch input is detected. Appropriately changing the threshold based on the touch input may assist the device equipped with a curved display unit in more effectively controlling a screen mode based on an amount of tilt of the device.

According to another embodiment, when the amount of tilt of the device exceeds a threshold, the device may move a movable mass to maintain the detected tilt so as to change the center of gravity of the device. In this way, a user may control the device to maintain a desired position.

According to a further embodiment, the device may provide an indicator that indicates a predetermined touch input. Provision of the indicator may allow the user to easily know a screen mode of the device and a method of controlling the center of gravity.

### Brief Description of Drawings

The accompanying drawings, which are included to provide a further understanding of the disclosure and are incorporated in and constitute a part of this application, illustrate embodiment(s) and together with the description serve to explain the principle of the disclosure. In the drawings:
FIG. 1 is a view showing the exterior and interior of a device equipped with a curved display unit according to one embodiment;
FIG. 2 is a block diagram of the device according to one embodiment;
FIG. 3 is a view showing an embodiment in which the device provides a screen mode for an application;
FIG. 4 is a view showing an embodiment in which a screen mode is switched based on a tilt of the device;
FIG. 5 is a view showing an embodiment in which the center of gravity of the device is moved based on a predetermined touch input as well as a tilt of the device;
FIG. 6 is a view showing an embodiment in which the center of gravity of the device is moved based on a predetermined touch input;
FIG. 7 is a view showing various embodiments with regard to a first touch input and a second touch input; and
FIG. 8 is a flowchart showing a method of switching a screen mode of a device based on a touch input as well as a tilt of the device.

### Best Mode for Carrying out the Invention

Although the terms used in the following description are selected, as much as possible, from general terms that are widely used at present while taking into consideration the functions obtained in accordance with the embodiments, these terms may be replaced by other terms based on intensions of those skilled in the art, customs, emergence of new technologies, or the like. Also, in a particular case, terms that are arbitrarily selected by the applicant may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

Moreover, although the embodiments will be described herein in detail with reference to the accompanying drawings and content described in the accompanying drawings, it should be understood that the disclosure is not limited to or restricted by the embodiments.

Portable devices are becoming much thinner and lighter with advances in electronic device fabrication technology. The disclosure relates to a portable electronic device, which is hereinafter referred to as a portable device. The portable device refers to various electronic devices having mobility including, for example, a mobile phone, a Personal Digital Assistant (PDA), a laptop computer, a tablet PC, an MP3 player, a CD player, and a DVD player. Hereinafter, the portable device will simple be referred to as a device.

Advance in the technologies of display elements equipped in devices has enabled production of a flexible display panel. The flexible display panel refers to a display unit that is fabricated using a pliable, bendable, roll-able flexible substrate without loss of display characteristics differently from a conventional hard display panel. The flexible display panel is also referred to as e-paper. The flexible display panel is lighter and thinner and has greater shock-resistance than conventional hard display panels, and is freely bendable. The substrate used in the flexible display panel may be fabricated as a metal foil, very thin glass, or plastic substrate. In particular, in the case of a plastic substrate, a polycarbonate (PC) substrate, a polyethylene terephthalate (PET) substrate, a polyether sulfone (PES) substrate, a polyimide (PI) substrate, a polyethylene naphthalate (PEN) substrate, and an acrylate substrate may be used.

In the disclosure, a display unit may include the aforementioned flexible display panel. In particular, the display unit of the disclosure may include a curved flexible display panel. In the following description, the display unit may refer to curved display unit.

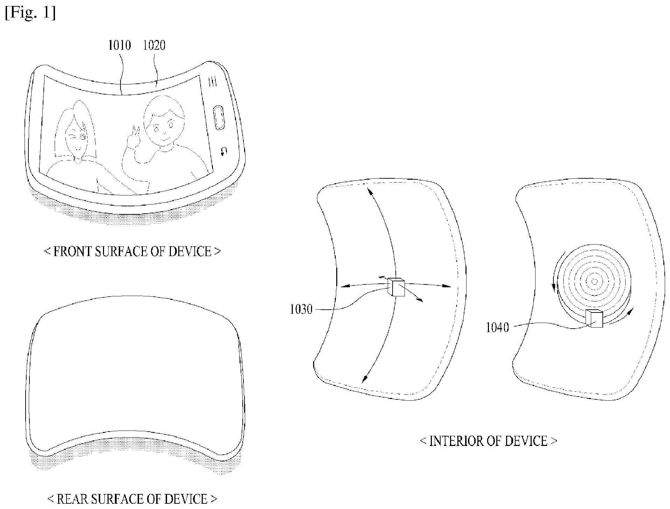

FIG. 1 is a view showing the exterior and interior of a device equipped with a curved display unit according to one embodiment.

The device, designated by reference numeral 1020, may be equipped with a curved display unit 1010. One embodiment in which the device 1020 is equipped with the curved display unit 1010 having an inwardly bent shape is shown in the drawing. Alternatively, differently from illustration of the drawing, the device 1020 may be equipped with an outwardly bent and curved display unit. In addition, the device 1020 may be equipped with a curved display unit, one side or the other side of which is bent. That is, the curved display unit 1010 is not limited to a specific shape as exemplarily shown in the drawing. Note that, for convenience of description, as exemplarily shown in the drawing, the inwardly bent and curved display unit 1010 will be described hereinafter by way of a representative example of the display unit. Meanwhile, a surface of the device 1020 to which the curved display unit 1010 is attached may be referred to as a front surface of the device 1020. In addition, a opposite surface to the surface of the device 1020 to which the curved display unit 1010 is attached may be referred to as a rear surface of the device 1020.

In one embodiment, the device 1020 may include a movable mass 1030 or 1040 provided therein. The movable mass 1030 or 1040 may refer to an element that has a predetermined mass value and is movable within the device 1020 to change the center of gravity of the device 1020. The movable mass 1030 or 1040 may be moved in various directions within the device 1020, thereby serving to change the center of gravity of the device 1020. In one embodiment, the movable mass 1030 may be moved in various directions including, e.g., upward, downward, leftward, rightward, or diagonally along a rail within the device 1020. In another embodiment, the movable mass 1040 may be moved by being rotated along with a disc within the device 1020. The movable mass 1030 or 1040 may be embodied in various ways so long as they can change the center of gravity of the device 1020, and are not limited to the above-described embodiment.

The movable mass 1030 or 1040 may be an internal component of the device 1020. For example, the movable mass 1030 or 1040 may include a battery, a circuit board, a camera, or a display unit of the device 1020, or combinations thereof. That is, it is unnecessary to add a separate component serving as the movable mass 1030 or 1040, and movement of any internal component of the device 1020 may be controlled to realize the function of the movable mass 1030 or 1040.

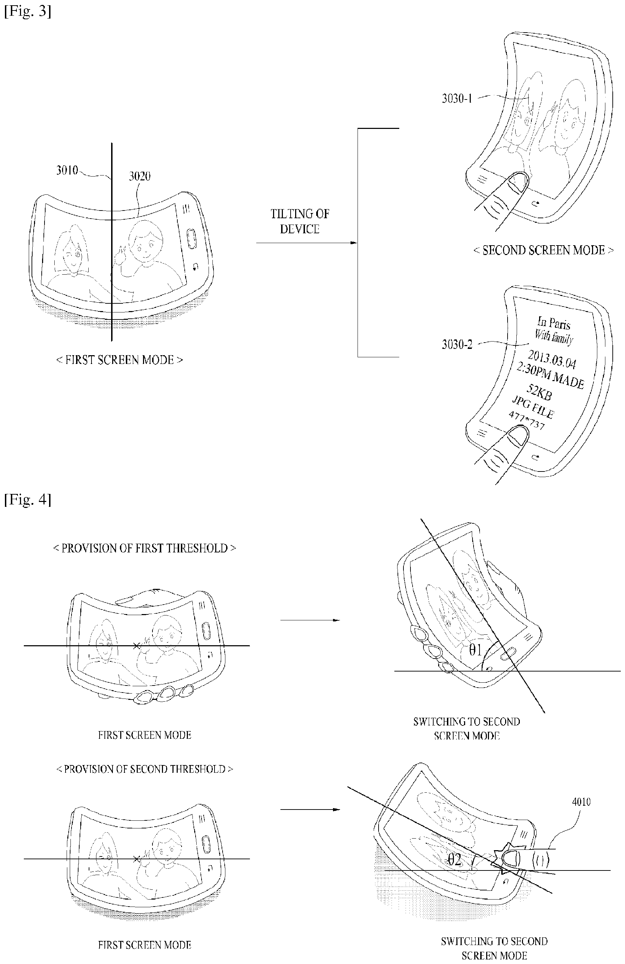

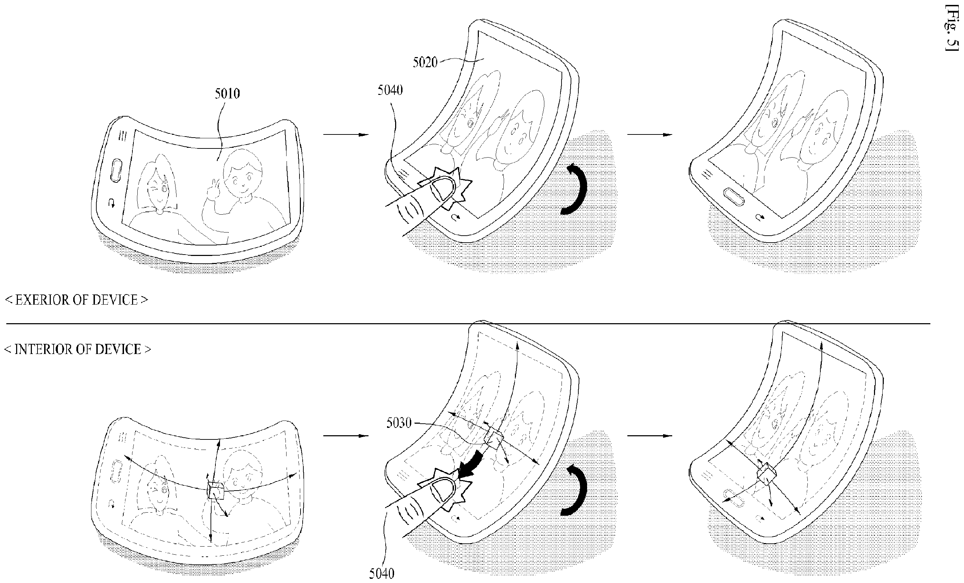

Once the movable mass 1030 or 1040 is moved within the device 1020 as described above, the center of gravity of the device 1020 may be changed. In this case, the device 1020 may have a curved shape, and therefore a position of the device 1020 may be changed in various ways as the center of gravity is changed. An embodiment with regard to change in the position of the device 1020 depending on change in the center of gravity will be described later in detail with reference to FIGs. 4 and 5.

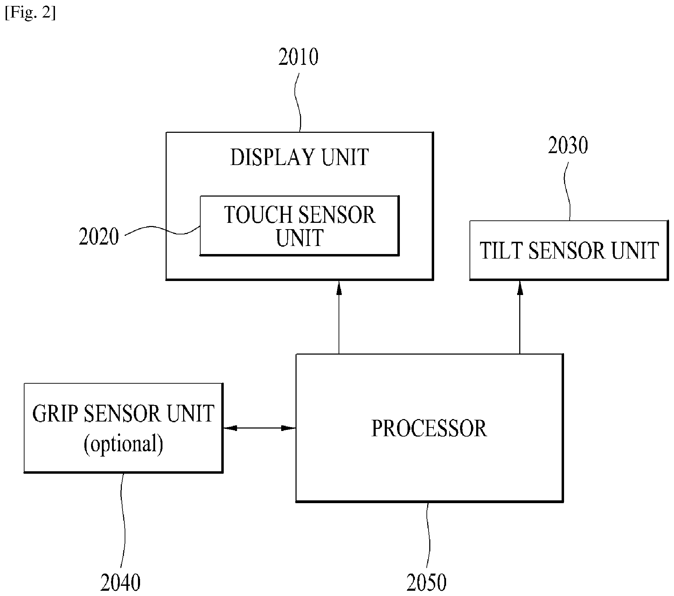

FIG. 2 is a block diagram of the device according to one embodiment. In FIG. 2, the device may include a display unit 2010, a touch sensor unit 2020, a tilt sensor unit 2030, a grip sensor unit 2040, and a processor 2050.

The display unit 2010 may display an image. More specifically, the display unit 2010 may display an execution image of an application that is executed by the processor 2050. In the disclosure, the image may refer to a stationary image, a moving image, text or various other visible images that may be displayed on the display unit 2010. In particular, the display unit 2010 of the disclosure may display various images based on a screen mode for an application. A detailed description of the screen mode will follow with reference to FIG. 3.

The display unit 2010 may include the touch sensor unit 2020 to sense a touch input on the display unit 2010. More specifically, the display unit 2010 may sense a user touch input using at least one sensing means equipped in the device. In one embodiment, the at least one sensing means may include various touch sensing means, such as a touch sensor, a fingerprint sensor, a motion sensor, a proximity sensor, a pressure sensor, etc. The touch sensor unit 2020 is a generic term of the aforementioned various sensing means, and the aforementioned sensors may be embodied as separate elements included in the device, or may be combined to constitute at least one element included in the device.

The display unit 2010 may sense various user touch inputs via the touch sensor unit 2020. More specifically, the touch sensor unit 2020 may sense various contact or noncontact touch inputs, such as a long-press touch input, a short-press touch input, a drag touch input, a release touch input, a hovering input, or a flicking touch input of the user. Moreover, the touch sensor unit 2020 may sense a touch input by various touch input tools, such as a touch pen, a stylus pen, etc., and may transmit the sensed result to the processor 2050.

In the disclosure, the display unit 2010 may include a flexible display panel. The flexible display panel may be mounted, in a curved form, in the device according to characteristics of the panel. In the disclosure, as mentioned in FIG. 1, the inwardly bent and curved display unit 2010 will be described by way of a representative embodiment.

The tilt sensor unit 2030 may sense a tilt of the device. More specifically the tilt sensor unit 2030 may sense an upward or downward amount of tilt of the device on the basis of a horizontal center axis of the device when the device is vertically oriented. Alternatively, the tilt sensor unit 2030 may sense a leftward or rightward amount of tilt of the device on the basis of a vertical center axis of the device when the device is horizontally oriented. The tilt sensor unit 2030 may sense an amount of tilt of the device using at least one sensing means equipped in the device. In one embodiment, the at least one sensing means may include various tilt sensing means, such as a gravity sensor, a geomagnetic sensor, a motion sensor, a gyro sensor, an accelerometer, an infrared sensor, an inclination sensor, a height sensor, a proximity sensor, an infrared sensor, a luminance sensor, a depth sensor, a pressure sensor, etc. The tilt sensor unit 2030 may be a generic term for the above enumerated various sensing means. Also, the above enumerated sensors may be provided as individual elements included in the digital device, or may be combined to constitute at least one element.

The grip sensor unit 2040 may sense grip of the device. More specifically, the grip sensor unit 2040 may sense whether or not the device is being gripped. The grip sensor unit 2040 may sense whether or not a user is gripping the device using at least one sensor selected from among a luminance sensor, a pressure sensor, a touch sensor, and a motion sensor. The grip sensor unit 2040 may be provided at one side of the device to sense whether or not the user is gripping the device. In addition, the grip sensor unit 2040 may be selectively provided in the device according to embodiments.

Although not shown in the drawing, the device may include an object sensor unit (not shown). The object sensor unit may sense whether or not the device is placed on another object. Moreover, the object sensor unit may sense properties of the object on which the device is placed. The properties of the object may include at least one selected from among texture, color, and reflectivity of the object. The object sensor unit may transmit information on the sensed properties of the object to the processor 2050, and the processor 2050 may control display of an image based on the received information.

The processor 2050 may execute various applications by processing data within the device. In addition, the processor 2050 may control execution of an application contained in the device in response to a control instruction. The processor 2050 may control the aforementioned respective units of the device as well as data transmission/ reception between units. In addition, the processor 2050 may execute a command in response to an input signal if the signal input via the aforementioned sensor units is sensed.

In particular, the processor 2050 of the disclosure may control a screen mode of an application based on an amount of tilt of the device. The processor 2050 may perform switching between screen modes for an application when it is detected that an amount of tilt of the device exceeds a threshold. For example, in a state in which an application that is being executed is in a first screen mode, the processor 2050 may switch from the first screen mode to a second screen mode when the device is tilted beyond a threshold. Note that the threshold may be changed according to whether or not tilting of the device is detected along with a predetermined touch input. A more detailed description of this will follow with reference to FIG. 4.

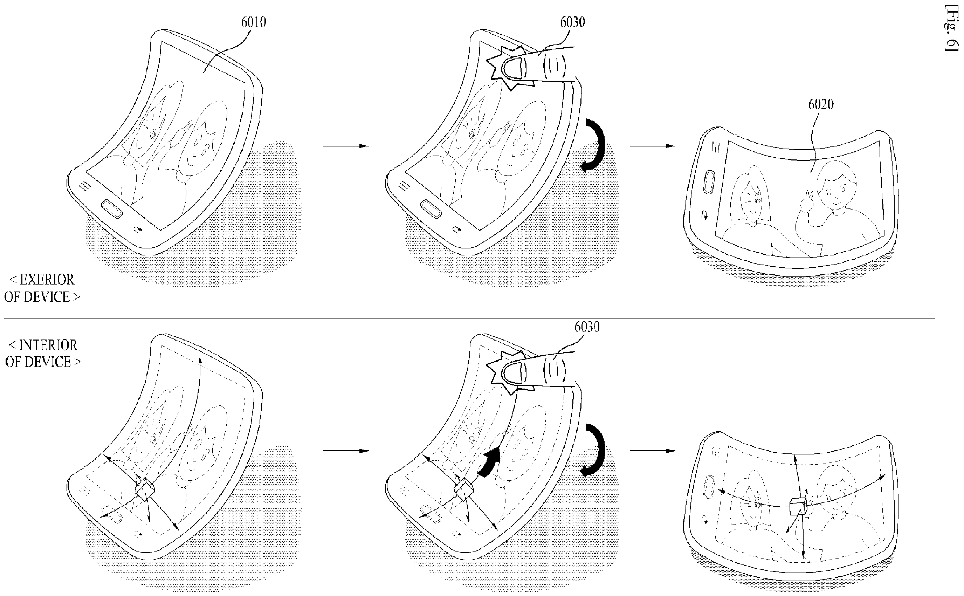

Moreover, the processor 2050 may change the center of gravity of the device by moving a movable mass located within the device. More specifically, the processor 2050 may move the movable mass based on a touch input as well as a tilt of the device. A more detailed description of this will follow with reference to FIGs. 5 and 6.

Hereinafter, in the case in which each operation or motion performed by the portable device begins or proceeds in response to user input, note that a description of generation of a user input signal is replaced by the above description. In addition, the processor 2050 may be represented as controlling the device or at least one unit included in the device in response to a user input, and may be understood as equivalent to the device.

Meanwhile, FIG. 2 is a block diagram showing one embodiment of the portable device, and separate blocks logically classify constituent elements of the device. Thus, the aforementioned elements of the device may be mounted as a single chip or a plurality of chips based on device design.

FIG. 3 is a view showing an embodiment in which the device provides a screen mode for an application.

The device may provide various screen modes with regard to an application that is being executed based on an amount of tilt of the device. Alternatively, the device may provide various screen modes with regard to an application execution screen that is being displayed based on a tilt of the device.

In the disclosure, the screen mode may refer to a mode in which an application execution screen is displayed as a horizontal screen mode 3020 or a vertical screen mode 3030-1 and 3030-2. That is, the screen mode may include a landscape mode 3020 and a portrait mode 3030-1 or 3030-2. In this case, the landscape mode may be referred to as a first screen mode 3020, and the portrait mode may be referred to as a second screen mode 3030-1 or 3030-2. If switching between screen modes occurs, the device may simply rotate a screen that is being displayed. Alternatively, if switching between screen modes occurs, the device may convert a screen that is being displayed into a screen for the switched screen mode.

For example, assuming that a gallery application is being executed in a first screen mode, the device may display a landscape photo 3020. In this case, if an amount of tilt of the device beyond a threshold is detected, the device may switch from the first screen mode 3020 to the second screen mode 3030-1. Once switching to the second screen mode 3030-1 is completed, the device may convert a landscape photo of the first screen mode 3020 into a portrait photo of the second screen mode 3030-1 so as to display the portrait photo of the second screen mode 3030-1. That is, once switching to the second screen mode 3030-1 is completed, the device may rotate and display the photo that is being displayed in the first screen mode 3020. In this case, the device may adjust the size of the photo according to the rotation. Alternatively, once switching to the second screen mode 3030-2 is completed, the device may display additional information on the photo that is being displayed in the first screen mode 3020. In this case, the additional information on the photo may be displayed in a portrait form.

In the disclosure, switching between screen modes based on an amount of tilt of the device is necessary because, when a screen remains in an original orientation thereof despite tilting of the device, the user may view a tilted screen and thus may have difficulty in recognizing information displayed on the screen. For this reason, the device of the disclosure may control display such that a screen is rotated based on a tilted direction of the device to allow the user to easily recognize information regardless of a tilt of the device. For example, as exemplarily shown in the drawing, when the device is tilted leftward from a vertical center line 3010 during display of the first screen mode 3020, the device may display a portrait screen showing an image of the first screen mode 3020 on a basis of the right side of the vertical center line 3010. Alternatively, when the device is tilted rightward from the vertical center line 3010 during display of the first screen mode 3020, the device may display a portrait screen showing an image of the first screen mode 3020 on a basis of the left side of the vertical center line 3010.

FIG. 4 is a view showing an embodiment in which a screen mode is switched based on an amount of tilt of the device.

The device of the disclosure may perform switching between screen modes based on an amount of tilt of the device. In one embodiment, the tilt may refer to an angle between a ground surface and the device.

When the device is tilted such that an angle θ between the ground surface and the device exceeds a first threshold θ1, the device may switch from a first screen mode to a second screen mode. In other words, if the amount of tilt θ of the device exceeds the first threshold θ1, the device may perform switching between screen modes. This is because switching from the first screen mode to the second screen mode when the device is tilted beyond the first threshold θ1 may allow the user to more easily recognize displayed information.

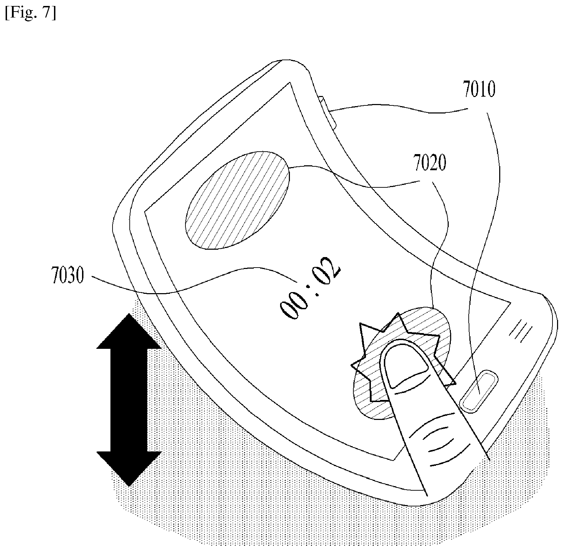

On the other hand, when a first touch input 4010 that is a predetermined touch input and the amount of tilt θ of the device are detected, the device may perform switching between screen modes at a second threshold θ2 which is less than the first threshold θ1. That is, if only the amount of tilt θ of the device is detected without the first touch input 4010, the device may perform switching between screen modes when the amount of tilt θ exceeds the first threshold θ1. However, if the amount of tilt θ of the device is detected along with the first touch input 4010, the device may perform switching between screen modes when the amount of tilt θ exceeds the second threshold θ2. In this case, the second threshold θ2 may be less than the first threshold θ1. That is, if the first touch input 4010 is additionally detected, differently from the case in which the first touch input 4010 is not present, the device may perform switching between screen modes even if the device is slightly tilted. This means that the first touch input 4010 of the disclosure is a predetermined touch input of the user required to cause switching between screen modes and the input clearly indicates user desire for switching between screen modes. Accordingly, the device may more rapidly switch from the first screen mode to the second screen mode under provision of the second threshold θ2 as a smaller tilt. As such, if tilting of the device is detected along with the first touch input 4010, more rapid screen switching than in the case in which the first touch input 4010 is not present may be accomplished. A more detailed description related to various embodiments of the first touch input 4010 will follow with reference to FIG. 7.

In the same context, according to an additional embodiment, the device may determine a threshold, at which switching between screen modes occurs during execution of a predetermined application, to a third threshold that is less than the second threshold θ2. In the case in which an application is adapted for execution in a second screen mode or is suitable for execution in the second screen mode, the device may provide a third threshold as a threshold that causes switching between screen modes during execution of the application. This is because if the user executes an application optimized for a second screen mode, this means that the user has desire for switching to the second screen mode. Accordingly, the device may provide a third threshold that is less than the second threshold θ2 such that switching to the second screen mode rapidly occurs even when the device is slightly tilted.

In another embodiment, a threshold may be determined by sensing of whether or not the device is gripped. More specifically, if it is sensed that the user is gripping the device, the device may maintain the first threshold θ1 regardless of whether or not the first touch input 4010 is sensed. In other words, if it is sensed that the user is gripping the device, the device may perform switching between screen modes if the tilt of the device exceeds the first threshold θ1 even if the first touch input 4010 is detected. While the user is gripping the device, the tilt θ of the device may be more easily changed. In this case, applying the second threshold θ2 less than the first threshold θ1 to the present embodiment may confuse the user because a screen mode will be changed even when the device is slightly tilted. Accordingly, in this case, it is reasonable that the first threshold θ1 is maintained to ensure stable switching between screen modes so as not to confuse the user. Alternatively, the device may additionally provide a threshold greater than the first threshold θ1 to ensure stable switching between screen modes.

In a further embodiment, a threshold may be determined by sensing whether or not the device is placed on the floor. When the device is placed on the floor, the amount of tilt θ of the device may not be easily changed as compared to the case in which the device is gripped. Accordingly, in this case, as described above, the device may provide the second threshold θ2 as a threshold of the amount of tilt θ for switching between screen modes.

FIG. 5 is a view showing an embodiment in which the center of gravity of the device is moved based on a predetermined touch input and a tilt of the device.

In the disclosure, the center of gravity of the device may be changed simultaneous with switching of a screen mode as described above with reference to FIGs. 3 and 4. More specifically, if the device detects a predetermined touch input as well as tilting of the device for switching between screen modes, the device may perform switching between screen modes, and additionally move a movable mass 5030 to change the center of gravity of the device. For example, if a first touch input 5040 and tilting of the device are detected during execution of a first screen mode 5010, the device may switch from the first screen mode 5010 to a second screen mode 5020. In this case, the device may move the movable mass 5030 simultaneously with switching to the second screen mode 5020. Since the movable mass 5030 has a predetermined mass value, the center of gravity of the device may be changed via movement of the movable mass 5030.

The reason of changing the center of gravity of the device is that, in a state in which the device is oriented such that a front surface of the display unit faces upward, it is difficult to achieve a sufficient viewing angle between the display unit and the user when a distance between the device and the user increases. Therefore, the device may move the center of gravity and change a position of the device using curved characteristics of the display unit to allow the device to maintain a specific position, thereby achieving a sufficient viewing angle between the user and the device.

With regard to movement of the movable mass 5030, the device may move the movable mass 5030 to a predetermined position. The predetermined position may be set in various ways by the user according to device design purposes, the kind of application that is being executed, and designs. In this case, since the movable mass 5030 is always moved to the predetermined position, a tilt of the device after completion of movement of the movable mass 5030 may be equally maintained in substance.

In another embodiment, the device may move the movable mass 5030 based on an amount of tilt of the device. More specifically, the device may move the movable mass 5030 to maintain an amount of tilt of the device when the first touch input 5040 is completed. Alternatively, the device may move the movable mass 5030 to maintain an amount of tilt of the device at the occurrence time of switching to the second screen mode 5020. To maintain the changed tilt of the device, in one embodiment, the device may obtain the changed amount of tilt of the device, and obtain a position of the movable mass 5030 required to maintain the changed amount of tilt of the device. The device main maintain the changed amount of tilt of the device by moving the movable mass 5030 to the obtaind position of the movable mass 5030. In another embodiment, if the movable mass 5030, which has been freely moved by gravity, stays at a moved position beyond a predetermined time, the device may fix the movable mass 5030 at the corresponding position so as to maintain the changed amount of tilt of the device. The device may move the movable mass 5030 in various ways as described above with reference to FIG. 1.

In one embodiment, although not shown, the device may provide an indicator that indicates, e.g., a movement direction, movement completion time, and a position of the movable mass 5030. For example, the device may indicate a movement direction of the movable mass 5030 by displaying an arrow image that points in a movement direction of the movable mass 5030. In one embodiment, the device may provide a notification of completion of movement of the movable mass 5030. For example, the device may provide the user with a notification with regard to movement of the center of gravity by displaying a message that informs change in the center of gravity as movement of the movable mass 5030 is completed.

Meanwhile, like the case in which switching to the second screen mode 5020 is not performed if it is sensed that the user is gripping the device as described above with reference to FIG. 4, the device may not move the movable mass 5030 if it is sensed that the user is gripping the device. A position of the device is changed via movement of the movable mass 5030 in order to provide the user with a sufficient viewing angle even when the device is placed on the floor. However, it is unnecessary to move the movable mass 5030 if it is sensed that the user is gripping the device because the user can easily adjust a viewing angle by directly moving the device. Therefore, in the case in which it is sensed that the user is gripping the device, as exemplarily shown in FIG. 4, the device may not move the movable mass 5030 even if both the first touch input 5040 and the tilt of the device which exceeds a first threshold are detected.

As described above with reference to FIG. 4, in the case in which it is sensed that the device is placed on another object, switching to the second screen mode 5020 and movement of the movable mass 5030 may be performed simultaneously. This is because the device placed on the object, differently from the device gripped by the user, may have a need for movement of the movable mass 5030 to achieve a sufficient viewing angle.

FIG. 6 is a view showing an embodiment in which the center of gravity of the device is moved based on a predetermined touch input. Like the above description of FIG. 5, FIG. 6 will be described on the basis of the device, the center of which is moved via movement of a movable mass 6040.

The device may move the movable mass 6040 to an original position thereof in response to a second touch input 6030 that is a predetermined touch input. In other words, the device may move the movable mass 6040 to a predetermined position when detecting the second touch input 6030 that is a predetermined touch input. The predetermined position may be determined based on a changed amount of tilt of the device. For example, the device may move the movable mass 6040 to an original position thereof by a distance equal to the changed amount of tilt of the device. In addition, the predetermined position may be variously determined based on device design purposes, designs, installation methods of the movable mass 6040, the kind of application that is being executed, and user setting, and is not limited to the above-described embodiment. Once the movable mass 6040 is moved to an original position thereof, the center of gravity of the device may be moved. Moreover, the device may switch from a second screen mode 6010 to a first screen mode 6020.

In the disclosure, the second touch input 6030 may be a predetermined touch input to switch from the second screen mode 6010 to the first screen mode 6020. Alternatively, the second touch input 6030 may be a predetermined touch input to return the movable mass 6040 to an original position thereof. The second touch input 6030 may be embodied in various ways, and a more detailed description of this will follow with reference to FIG. 7.

FIG. 7 is a view showing various embodiments with regard to a first touch input and a second touch input. In the disclosure, the first touch input and the second touch input may be touch inputs for switching between screen modes. Alternatively, in the disclosure, the first touch input and the second touch input may be predetermined touch inputs for movement of a movable mass. The first touch input and the second touch input may be embodied in various ways.

In one embodiment, the first touch input or the second touch input may be a touch input on a curved display unit. More specifically, the first touch input or the second touch input may be a touch input on a predetermined position or region 7020 of the curved display unit. The device may display a software button 7020 in a predetermined region of the curved display unit to indicate the predetermined region 7020. The user may instruct switching between screen modes or may move a movable mass, by touching the software button 7020,.

In another embodiment, the first touch input or the second touch input may be a touch input on a hardware button 7010 provided at the device. The hardware button 7010 may be a physical button 7010 provided at the device, such as a power on/off button, a volume adjustment button, an unlock button, a home screen button, etc.

In another embodiment, the first touch input or the second touch input may be a touch input that remains in contact beyond a predetermined time. The device may display an indicator 7030 to indicate the predetermined time. If contact of the touch input maintains beyond the predetermined time, the device may perform switching between screen modes, or may move a movable mass.

In another embodiment, the first touch input or the second touch input may be a touch input of drawing a predetermined pattern (not shown). The device may display an indicator to guide the user through the predetermined pattern. The user may input a touch according to the touch pattern guided by the indicator so as to achieve switching between screen modes or movement of a movable mass.

In particular, the first touch input may be a touch input of changing an amount of tilt of the device in a state in which a front surface of the curved display unit faces upward. That is, when a tilt of the device placed on another object is changed by a touch input, the touch input may be referred to as a first touch input. The device may detect whether or not the device is placed on another object, or whether or not the user is gripping the device, thereby performing switching between screen modes or moving the movable mass based on change in the amount of tilt of the device.

In addition, the first touch input or the second touch input may include various gesture inputs with regard to the device, in addition to the above-described embodiments, and may be set and changed in various ways based on device design purposes, the kind of application, and user setting.

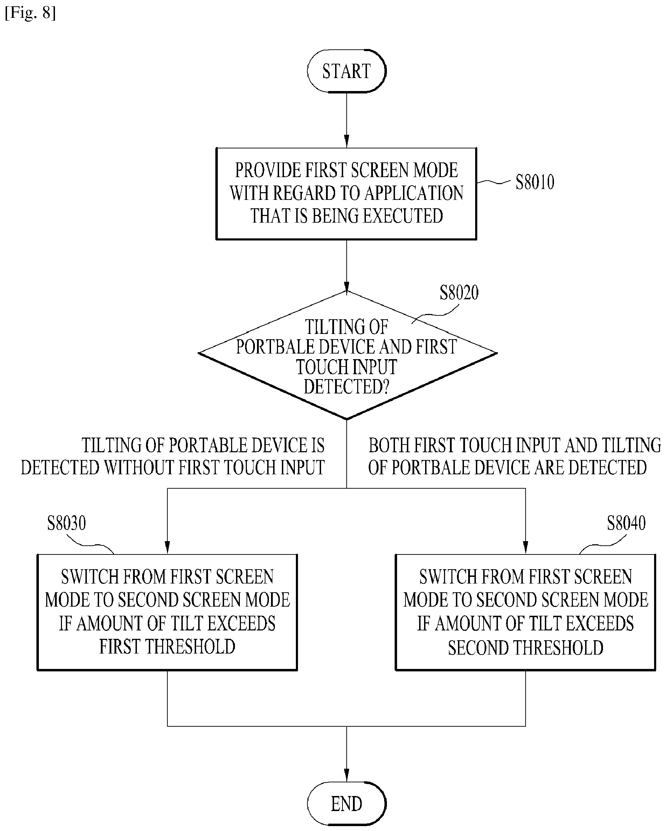

FIG. 8 is a flowchart showing a method of switching screen modes of a device based on a touch input as well as an amount of tilt of the device. In the flowchart, a detailed description of configurations similar or equal to the above description of FIGs. 4 to 6 will be omitted herein.

First, the device may provide a first screen mode with regard to an application that is being executed (S8010). In the disclosure, the first screen mode may be a horizontal or landscape mode for display of an application execution screen. Details of the screen mode have been described above with reference to FIG. 3.

Next, the device may judge whether or not both a tilt of the device and a first touch input are detected during provision of the first screen mode (S8020). In the disclosure, the first touch input may be a predetermined touch input for switching between screen modes. In another embodiment, the first touch input may be a predetermined touch input for change in the center of gravity. Various embodiments of the first touch input have been described above with reference to FIG. 7.

When only the tilt of the device is detected without the first touch input, and when the tilt of the device exceeds a first threshold, the first screen mode may be switched to the second screen mode (S8030). In the disclosure, the second screen mode may be a vertical or portrait mode for display of an application execution screen.

On the other hand, when the tilt of the device and the first touch input are detected together, and when the tilt of the device exceeds a second threshold, the first screen mode may be switched to the second screen mode (S8040). In this case, the second threshold is less than the first threshold. That is, when the first touch input and tilting of the device are detected, the device may be switched to the second screen mode even when the device is slightly tilted. Determination of the threshold has been described above in detail with reference to FIG. 4.

Although not shown in the flowchart, in one embodiment, the device may perform movement of the center of gravity of the device as well as switching between screen modes. More specifically, the device may move the movable mass provided therein based on the changed tilt of the device to enable change in the center of gravity. This has been described above with reference to FIG. 5. In addition, the movable mass may be returned to an original position by a second touch input that is a predetermined touch input on the device. This has been described above with reference to FIG. 6. In addition, various embodiments of the second touch input have been described with reference to FIG. 7.

Although the respective drawings have been described for convenience of description, the embodiments described with reference to the respective drawings may be combined with one another to realize novel embodiments. In addition, a computer readable recording medium in which a program to execute the above-described embodiments is stored may be designed as needed within the scope of the disclosure.

In addition, the device and the control method thereof are not limited to the configuration and method of the above-described embodiments, and some or all of the above-described embodiments may be selectively combined with one another to enable various modifications.

It will be apparent that, although the preferred embodiments have been shown and described above, the disclosure is not limited to the above-described specific embodiments, and various modifications and variations can be made by those skilled in the art without departing from the subject-matter of the appended claims. Thus, it is intended that the modifications and variations should not be understood independently of the technical prospect of the disclosure.

In the disclosure, it will be understood that angles, distances, and lengths may represent accurate values, but may represent substantial angles, distances, and lengths within a predetermined range. That is, the angles, distances, and lengths of the disclosure may represent substantial angles, distances, and lengths within a tolerance range.

In addition, the disclosure describes both a device invention as well as a method invention, and descriptions of both inventions may be complementarily applied as needed.

### Mode of the Invention

Various embodiments have been described in the best mode for carrying out the invention.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

### Industrial Applicability

As described above, the present invention is totally or partially applicable to electronic devices.

## Claims

1. A portable device (1020) comprising:
a tilt sensor unit (2030) configured to obtain an amount of tilt of the portable device (1020), wherein the tilt refers to an angle (θ) between a reference ground surface and the portable device (1020);
a display unit (2010) attached to a front surface of the portable device (1020) and configured to sense a touch input on the front surface of the portable device (1020) and configured to display an image, wherein the rear surface of the portable device (1020) is curved to allow tilting or rocking of the device when the device is placed on a surface and the front surface of the display unit (2010) faces upwards, so that a predetermined touch input on a front surface of the portable device (1020) causes a tilting or a rocking of the portable device (1020); and
a processor (2050) configured to control the tilt sensor unit (2030), and the curved display unit (2010),
**characterized in that** the processor (2050) is further configured to:
when providing a landscape mode (3020) with regard to an application being currently executed,
switch from the landscape mode (3020) to a portrait mode (3030-1, 3030-2) when the tilt of the portable device (1020) is detected without a first touch input which is the predetermined touch input and the amount of the tilt exceeds a first threshold (θ1), and
switch from the landscape mode (3020) to the portrait mode (3030-1, 3030-2) when the tilt of the portable device (1020) is detected along with the first touch input (4010) that causes the tilting or the rocking of the portable device (1020) and the amount of the tilt exceeds a second threshold (θ2), wherein the second threshold (θ2) is less than the first threshold (θ1).

2. The portable device (1020) further comprising a movable mass (1030, 1040) controlled by the processor (2050) and having a predetermined mass value configured to move within the portable device (1020) and to change a center of gravity of the portable device (1020).

3. The portable device (1020) according to claim 1 or 2, wherein the display unit (2010) has an inwardly or outwardly bent shape.

4. The portable device (1020) according to claim 1 or 2, wherein the touch input (4010) is a contact-based touch input on the portable device (1020) for a predetermined period, and
wherein the processor (2050) is further configured to display an indicator that indicates the predetermined period on the display unit (2010).

5. The portable device according to claim 1, wherein the portable device (1020 comprises a physical button or a soft button displayed on the display unit (2010) configured to sense the touch input.

6. The portable device (1020) according to any one of claims 1-5, further comprising a grip sensor unit (2040) configured to sense whether or not the portable device (1020) is being gripped
wherein the processor (2050) is further configured to:
when the portable device (1020) is gripped, switch from the landscape mode (3020) to the portrait mode (3030-1, 3030-2) even when the tilt of the portable device (1020) is detected along with the first touch input (4010) and the amount of the tilt exceeds the first threshold (θ1).

7. The portable device (1020) according to any one of claims 2-6, wherein the processor (2050) is further configured to:
move the movable mass (1030, 1040) to a predetermined position when the tilt of the portable device (1020) is detected along with the first touch input (4010),
display an indicator that indicates movement of the movable mass (1030, 1040) on the display unit (2010), and
provide a notification of change in the center of gravity when the center of gravity of the portable device (1020) is changed as a movement of the movable mass (1030, 1040) is completed, and
wherein the predetermined position is determined based on a changed amount of the tilt.

8. The portable device (1020) according to any one of claims 2-7, wherein the processor (2050) is further configured to:
move the movable mass (1030, 1040) to a predetermined position, and
switch from the portrait mode (3030-1, 3030-2) back to the landscape mode (3020) when a second touch input which is a predetermined touch input is detected, and
wherein the predetermined position is determined based on a changed amount of the tilt.

9. The portable device (1020) according to claim 8, wherein the second touch input is a touch input including maintaining contact with the portable device (1020) for a predetermined period.

10. The portable device (1020) according to any one of claims 1-9, wherein the processor (2050) is further configured to switch from the landscape mode (3020) to the portrait mode (3030-1, 3030-2) when the tilt of the portable device (1020) is detected along with the first touch input (4010) and the amount of the tilt exceeds a third threshold (θ3) while a predetermined application is being executed, wherein the third threshold (θ3) is less than the second threshold (θ2).

11. The portable device (1020) according to any one of claims 1-10, wherein the tilt sensor unit (2030) includes at least one sensor of an accelerometer and a gyro sensor.

12. The portable device (1020) according to any one of claims 1-11, wherein the processor (2050) is further configured to provide the portrait mode (3030-1, 3030-2) according to a tilt direction of the portable device (1020).

13. The portable device (1020) according to any one of claims 2-12, wherein the movable mass (1030, 1040) includes at least one constituent element equipped in the portable device (1020).

14. The portable device (1020) according to any one of claims 2-13, wherein the processor (2050) is further configured to move or rotate the movable mass (1030, 1040) upward, downward, leftward, rightward, or diagonally within the portable device (1020) to change the center of gravity.

15. A method of controlling a portable device (1020), the portable device (1020) having a display unit (2010) attached to its front surface for sensing a touch input on the front surface and for displaying an image, the portable device (1020) having a rear surface which is curved to allow tilting or rocking of the device when the device is placed on a surface and the front surface of the display unit (2010) faces upwards, the method comprising:
providing (S8010) a landscape mode with regard to an application being currently executed;
detecting (S8020) a tilt of the portable device (1020) and a first touch input (4010) that is a predetermined touch input, wherein the tilt refers to an angle (θ) between a reference ground surface and the portable device (1020); and
switching (S8030) from the landscape mode (3020) to a portrait mode (3030-1, 3030-2) when the tilt of the portable device (1020) is detected without the first touch input (4010) and an amount of the tilt exceeds a first threshold (θ1),
switching (S8040) from the landscape mode (3020) to the portrait mode (3030-1, 3030-2) when the tilt of the portable device (1020) is detected along with the first touch input (4010) that causes the tilting or the rocking of the portable device (1020) and the amount of the tilt exceeds a second threshold (θ2), wherein the second threshold (θ2) is less than the first threshold (θ1).

## Patentansprüche

1. Tragbare Vorrichtung (1020), die Folgendes umfasst:
eine Neigungssensoreinheit (2030), die konfiguriert ist, einen Betrag einer Neigung der tragbaren Vorrichtung (1020) zu erhalten, wobei sich die Neigung auf einen Winkel (θ) zwischen einer Bezugsbodenfläche und der tragbaren Vorrichtung (1020) bezieht;
eine Anzeigeeinheit (2010), die an einer Vorderseite der tragbaren Vorrichtung (1020) angebracht ist, konfiguriert ist, eine Berührungseingabe an der Vorderseite der tragbaren Vorrichtung (1020) zu erfassen, und konfiguriert ist, ein Bild anzuzeigen, wobei die Rückseite der tragbaren Vorrichtung (1020) gekrümmt ist, um ein Neigen oder ein Wanken der Vorrichtung zu ermöglichen, wenn die Vorrichtung auf einer Oberfläche angeordnet ist und die Vorderseite der Anzeigeeinheit (2010) nach oben gewandt ist, derart, dass eine vorgegebene Berührungseingabe an einer Vorderseite der tragbaren Vorrichtung (1020) ein Neigen oder ein Wanken der tragbaren Vorrichtung (1020) bewirkt; und
einen Prozessor (2050), der konfiguriert ist, die Neigungssensoreinheit (2030) und die gekrümmte Anzeigeeinheit (2010) zu steuern,
**dadurch gekennzeichnet, dass** der Prozessor (2050) ferner konfiguriert ist, dann, wenn ein Landschaftsmodus (3020) in Bezug auf eine Anwendung, die gegenwärtig ausgeführt wird, bereitgestellt ist,
Umschalten vom Landschaftsmodus (3020) zu einem Porträtmodus (3030-1, 3030-2), wenn die Neigung der tragbaren Vorrichtung (1020) ohne eine erste Berührungseingabe, die die vorgegebene Berührungseingabe ist, detektiert wird und der Betrag der Neigung einen ersten Schwellenwert (θ1) überschreitet, und
Umschalten vom Landschaftsmodus (3020) zum Porträtmodus (3030-1, 3030-2), wenn die Neigung der tragbaren Vorrichtung (1020) zusammen mit der ersten Berührungseingabe (4010), die das Neigen oder das Wanken der tragbaren Vorrichtung (1020) bewirkt, detektiert wird und der Betrag der Neigung einen zweiten Schwellenwert (θ2) überschreitet, wobei der zweite Schwellenwert (θ2) kleiner als der erste Schwellenwert (θ1) ist.

2. Tragbare Vorrichtung (1020), die ferner eine bewegliche Masse (1030, 1040) umfasst, die durch den Prozessor (2050) gesteuert wird, die einen vorgegebenen Massenwert besitzt und die konfiguriert ist, sich in der tragbaren Vorrichtung (1020) zu bewegen und einen Schwerpunkt der tragbaren Vorrichtung (1020) zu ändern.

3. Tragbare Vorrichtung (1020) nach Anspruch 1 oder 2, wobei die Anzeigeeinheit (2010) eine nach innen oder nach außen gebogene Form besitzt.

4. Tragbare Vorrichtung (1020) nach Anspruch 1 oder 2, wobei die Berührungseingabe (4010) eine kontaktbasierte Berührungseingabe an der tragbaren Vorrichtung (1020) für einen vorgegebenen Zeitraum ist und
der Prozessor (2050) ferner konfiguriert ist, einen Indikator, der den vorgegebenen Zeitraum an der Anzeigeeinheit (2010) angibt, anzuzeigen.

5. Tragbare Vorrichtung (1020) nach Anspruch 1, wobei die tragbare Vorrichtung (1020) eine physische Taste oder eine Software-Schaltfläche, die an der Anzeigeeinheit (2010) angezeigt wird, umfasst, die konfiguriert ist, die Berührungseingabe zu erfassen.

6. Tragbare Vorrichtung (1020) nach einem der Ansprüche 1-5, die ferner eine Griffsensoreinheit (240) umfasst, die konfiguriert ist, zu erfassen, ob die tragbare Vorrichtung (1020) gegriffen ist oder nicht, wobei
der Prozessor (2050) ferner konfiguriert ist,
dann, wenn die tragbare Vorrichtung (1020) gegriffen ist, vom Landschaftsmodus (3020) zum Porträtmodus (3030-1, 3030-2) umzuschalten, selbst wenn die Neigung der tragbaren Vorrichtung (1020) zusammen mit der ersten Berührungseingabe (4010) detektiert wird und der Betrag der Neigung den ersten Schwellenwert (θ1) überschreitet.

7. Tragbare Vorrichtung (1020) nach einem der Ansprüche 2-6, wobei der Prozessor (2050) ferner konfiguriert ist zum
Bewegen der beweglichen Masse (1030, 1040) zu einer vorgegebenen Position, wenn die Neigung der tragbaren Vorrichtung (1020) zusammen mit der ersten Berührungseingabe (4010) detektiert wird,
Anzeigen eines Indikators, der eine Bewegung der beweglichen Masse (1030, 1040) auf der Anzeigeeinheit (2010) anzeigt, und
Bereitstellen einer Benachrichtigung einer Änderung des Schwerpunkts, wenn der Schwerpunkt der tragbaren Vorrichtung (1020) geändert wird, wenn eine Bewegung der beweglichen Masse (1030, 1040) abgeschlossen ist, wobei
die vorgegebene Position auf der Grundlage eines Betrags, um den die Neigung geändert wurde, bestimmt wird.

8. Tragbare Vorrichtung (1020) nach einem der Ansprüche 2-7, wobei der Prozessor (2050) ferner konfiguriert ist zum
Bewegen der beweglichen Masse (1030, 1040) zu einer vorgegebenen Position und
Umschalten vom Porträtmodus (3030-1, 3030-2) zurück zum Landschaftsmodus (3020), wenn eine zweite Berührungseingabe, die eine vorgegebene Berührungseingabe ist, detektiert wird, wobei
die vorgegebene Position auf der Grundlage eines Betrags, um den die Neigung geändert wurde, bestimmt wird.

9. Tragbare Vorrichtung (1020) nach Anspruch 8, wobei die zweite Berührungseingabe eine Berührungseingabe ist, die das Halten eines Kontakts mit der tragbaren Vorrichtung (1020) für einen vorgegebenen Zeitraum umfasst.

10. Tragbare Vorrichtung (1020) nach einem der Ansprüche 1-9, wobei der Prozessor (2050) ferner konfiguriert ist, vom Landschaftsmodus (3020) zum Porträtmodus (3030-1, 3030-2) umzuschalten, wenn die Neigung die Neigung der tragbaren Vorrichtung (1020) zusammen mit der ersten Berührungseingabe (4010) detektiert wird und der Betrag der Neigung einen dritten Schwellenwert (θ3) überschreitet, während eine vorgegebene Anwendung ausgeführt wird, wobei der dritte Schwellenwert (θ3) kleiner als der zweite Schwellenwert (θ2) ist.

11. Tragbare Vorrichtung (1020) nach einem der Ansprüche 1-10, wobei die Neigungssensoreinheit (2030) mindestens einen Sensor aus einem Beschleunigungsaufnehmer und einem Kreiselsensor umfasst.

12. Tragbare Vorrichtung (1020) nach einem der Ansprüche 1-11, wobei der Prozessor (2050) ferner konfiguriert ist, den Porträtmodus (3030-1, 3030-2) gemäß einer Neigungsrichtung der tragbaren Vorrichtung (1020) bereitzustellen.

13. Tragbare Vorrichtung (1020) nach einem der Ansprüche 2-12, wobei die bewegliche Masse (1030, 1040) mindestens einen Bestandteil umfasst, mit dem die tragbare Vorrichtung (1020) ausgestattet ist.

14. Tragbare Vorrichtung (1020) nach einem der Ansprüche 2-13, wobei der Prozessor (2050) ferner konfiguriert ist, die bewegliche Masse (1030, 1040) nach oben, nach unten, nach links, nach rechts oder diagonal in der tragbaren Vorrichtung (1020) zu bewegen, um den Schwerpunkt zu ändern.

15. Verfahren zum Steuern einer tragbaren Vorrichtung (1020), wobei die tragbare Vorrichtung (1020) eine Anzeigeeinheit (2010) besitzt, die an ihrer Vorderseite angebracht ist, um eine Berührungseingabe an der Vorderseite zu erfassen und ein Bild anzuzeigen, wobei die tragbare Vorrichtung (1020) eine Rückseite besitzt, die gekrümmt ist, um ein Neigen oder ein Wanken der Vorrichtung zu ermöglichen, wenn die Vorrichtung auf einer Oberfläche angeordnet ist und die Vorderseite der Anzeigeeinheit (2010) nach oben gewandt ist, wobei das Verfahren Folgendes umfasst:
Bereitstellen (S8010) eines Landschaftsmodus in Bezug auf eine Anwendung, die gegenwärtig ausgeführt wird;
Detektieren (S8020) einer Neigung der tragbaren Vorrichtung (1020) und einer ersten Berührungseingabe (4010), die eine vorgegebene Berührungseingabe ist, wobei die Neigung sich auf einen Winkel (θ) zwischen einer Bezugsbodenfläche und der tragbaren Vorrichtung (1020) bezieht;
Umschalten (S8030) vom Landschaftsmodus (3020) zu einem Porträtmodus (3030-1, 3030-2), wenn die Neigung der tragbaren Vorrichtung (1020) ohne die erste Berührungseingabe (4010) detektiert wird und ein Betrag der Neigung einen ersten Schwellenwert (θ1) überschreitet, und
Umschalten (S8040) vom Landschaftsmodus (3020) zum Porträtmodus (3030-1, 3030-2), wenn die Neigung der tragbaren Vorrichtung (1020) zusammen mit der ersten Berührungseingabe (4010), die das Neigen oder das Wanken der tragbaren Vorrichtung (1020) bewirkt, detektiert wird und der Betrag der Neigung einen zweiten Schwellenwert (θ2) überschreitet, wobei der zweite Schwellenwert (θ2) kleiner als der erste Schwellenwert (θ1) ist.

## Revendications

1. Dispositif portable (1020) comprenant :
une unité de détection d'inclinaison (2030) configurée pour l'obtention d'une quantité d'inclinaison du dispositif portable (1020), dans lequel l'inclinaison fait référence à un angle (θ) entre une surface de sol de référence et le dispositif portable (1020) ;
une unité d'affichage (2010) attachée à une surface avant du dispositif portable (1020) et configurée pour la détection d'une entrée de toucher sur la surface avant du dispositif portable (1020) et configurée pour l'affichage d'une image, dans lequel la surface arrière du dispositif portable (1020) est incurvée pour permettre l'inclinaison ou le basculement du dispositif lorsque le dispositif est placé sur une surface et la surface avant de l'unité d'affichage (2010) fait face vers le haut, de sorte qu'une entrée de toucher prédéterminée sur une surface avant du dispositif portable (1020) provoque une inclinaison ou un basculement du dispositif portable (1020) ; et
un processeur (2050) configuré pour commander l'unité de détection d'inclinaison (2030) et l'unité d'affichage incurvée (2010),
**caractérisé en ce que** le processeur (2050) est en outre configuré pour :
lors de la fourniture d'un mode paysage (3020) en ce qui concerne une application en cours d'exécution,
la commutation du mode paysage (3020) à un mode portrait (3030-1, 3030-2) lorsque l'inclinaison du dispositif portable (1020) est détectée sans une première entrée de toucher qui est l'entrée de toucher prédéterminée et la quantité de l'inclinaison dépasse un premier seuil (θ1), et
la commutation du mode paysage (3020) au mode portrait (3030-1, 3030-2) lorsque l'inclinaison du dispositif portable (1020) est détectée avec la première entrée de toucher (4010) qui provoque l'inclinaison ou le basculement du dispositif portable (1020) et la quantité de l'inclinaison dépasse un deuxième seuil (θ2), dans lequel le deuxième seuil (θ2) est inférieur au premier seuil (θ1).

2. Dispositif portable (1020) comprenant en outre une masse mobile (1030, 1040) commandée par le processeur (2050) et ayant une valeur de masse prédéterminée configurée pour se déplacer à l'intérieur du dispositif portable (1020) et pour changer un centre de gravité du dispositif portable (1020).

3. Dispositif portable (1020) selon la revendication 1 ou 2, dans lequel l'unité d'affichage (2010) a une forme pliée vers l'intérieur ou vers l'extérieur.

4. Dispositif portable (1020) selon la revendication 1 ou 2, dans lequel l'entrée de toucher (4010) est une entrée de toucher basée sur un contact sur le dispositif portable (1020) pendant une période prédéterminée, et dans lequel le processeur (2050) est en outre configuré pour l'affichage d'un indicateur indiquant la période prédéterminée sur l'unité d'affichage (2010).

5. Dispositif portable (1020) selon la revendication 1, dans lequel le dispositif portable (1020) comprend un bouton physique ou un bouton logiciel affiché sur l'unité d'affichage (2010) configuré pour la détection de l'entrée de toucher.

6. Dispositif portable (1020) selon l'une quelconque des revendications 1 à 5, comprenant en outre une unité de détection de préhension (2040) configurée pour la détection de la préhension du dispositif portable (1020),
dans lequel le processeur (2050) est en outre configuré pour :
lors de la préhension du dispositif portable (1020), la commutation du mode paysage (3020) au mode portrait (3030-1, 3030-2) même lorsque l'inclinaison du dispositif portable (1020) est détectée avec la première entrée de toucher (4010) et la quantité de l'inclinaison dépasse le premier seuil (θ1).

7. Dispositif portable (1020) selon l'une quelconque des revendications 2 à 6, dans lequel le processeur (2050) est en outre configuré pour :
le déplacement de la masse mobile (1030, 1040) à une position prédéterminée lorsque l'inclinaison du dispositif portable (1020) est détectée avec la première entrée de toucher (4010),
l'affichage d'un indicateur indiquant un déplacement de la masse mobile (1030, 1040) sur l'unité d'affichage (2010), et
la fourniture d'une notification de changement du centre de gravité lorsque le centre de gravité du dispositif portable (1020) est changé à la fin d'un déplacement de la masse mobile (1030, 1040), et
dans lequel la position prédéterminée est déterminée sur la base d'une quantité changée de l'inclinaison.

8. Dispositif portable (1020) selon l'une quelconque des revendications 2 à 7, dans lequel le processeur (2050) est en outre configuré pour :
le déplacement de la masse mobile (1030, 1040) à une position prédéterminée, et
la commutation du mode portrait (3030-1, 3030-2) au mode paysage (3020) à la détection d'une deuxième entrée de toucher qui est une entrée de toucher prédéterminée, et
dans lequel la position prédéterminée est déterminée sur la base d'une quantité changée de l'inclinaison.

9. Dispositif portable (1020) selon la revendication 8, dans lequel la deuxième entrée de toucher est une entrée de toucher incluant le maintien d'un contact avec le dispositif portable (1020) pendant une période prédéterminée.

10. Dispositif portable (1020) selon l'une quelconque des revendications 1 à 9, dans lequel le processeur (2050) est en outre configuré pour la commutation du mode paysage (3020) au mode portrait (3030-1, 3030-2) lorsque l'inclinaison du dispositif portable (1020) est détectée avec la première entrée de toucher (4010) et la quantité de l'inclinaison dépasse un troisième seuil (θ3) pendant qu'une application prédéterminée est en cours d'exécution, dans lequel le troisième seuil (θ3) est inférieur au deuxième seuil (θ2).

11. Dispositif portable (1020) selon l'une quelconque des revendications 1 à 10, dans lequel l'unité de détection d'inclinaison (2030) inclut au moins un capteur d'un accéléromètre et d'un capteur gyroscopique.

12. Dispositif portable (1020) selon l'une quelconque des revendications 1 à 11, dans lequel le processeur (2050) est en outre configuré pour la fourniture du mode portrait (3030-1, 3030-2) en fonction d'un sens d'inclinaison du dispositif portable (1020).

13. Dispositif portable (1020) selon l'une quelconque des revendications 2 à 12, dans lequel la masse mobile (1030, 1040) inclut au moins un élément constitutif dont le dispositif portable (1020) est équipé.

14. Dispositif portable (1020) selon l'une quelconque des revendications 2 à 13, dans lequel le processeur (2050) est en outre configuré pour le déplacement ou la rotation de la masse mobile (1030, 1040) vers le haut, vers le bas, vers la gauche, vers la droite ou diagonalement à l'intérieur du dispositif portable (1020) pour changer le centre de gravité.

15. Procédé de commande d'un dispositif portable (1020), le dispositif portable (1020) comportant une unité d'affichage (2010) attachée à sa surface avant pour la détection d'une entrée de toucher sur la surface avant du dispositif portable et pour l'affichage d'une image, le dispositif portable (1020) comportant une surface arrière qui est incurvée pour permettre l'inclinaison ou le basculement du dispositif lorsque le dispositif est placé sur une surface et la surface avant de l'unité d'affichage (2010) fait face vers le haut, le procédé comprenant :
la fourniture (S8010) d'un mode paysage en ce qui concerne une application en cours d'exécution ;
la détection (S8020) d'une inclinaison du dispositif portable (1020) et d'une première entrée de toucher (4010) qui est une entrée de toucher prédéterminée, dans lequel l'inclinaison fait référence à un angle (θ) entre une surface de sol de référence et le dispositif portable (1020) ; et
la commutation (S8040) du mode paysage (3020) à un mode portrait (3030-1, 3030-2) lorsque l'inclinaison du dispositif portable (1020) est détectée sans la première entrée de toucher (4010) et une quantité de l'inclinaison dépasse un premier seuil (θ1), et
la commutation (S8040) du mode paysage (3020) au mode portrait (3030-1, 3030-2) lorsque l'inclinaison du dispositif portable (1020) est détectée avec la première entrée de toucher (4010) qui provoque l'inclinaison ou le basculement du dispositif portable (1020) et la quantité de l'inclinaison dépasse un deuxième seuil (θ2), dans lequel le deuxième seuil (θ2) est inférieur au premier seuil (θ1).
